# EUROPEAN PATENT APPLICATION

(11) **EP 1 600 367 A1**
(43) Date of publication of application: **30.11.2005**
(21) Application number: 04076543.0
(22) Date of filing: 26.05.2004
(51) Int. Cl.: B62J 13/00

(54) **Fastener for a chain guard**

(30) Priority: 26.05.2004 NL 1023526
(71) Applicant: Hesling B.V., 7071 CK Ulft (NL)
(72) Inventor: Kruisselbrink, Herman Jan, 7101 LR Winterwijk (NL)
(74) Representative: Van Breda, Jacobus

(57) **Abstract**

The invention relates to a fastener for mounting and adjusting a support member (4) to be placed on a horizontal rear fork (2) of a bicycle frame and coupling means for fastening the chain guard (6) on the support member (4), wherein the support member (4) and the chain guard (6) each are provided with at least one substantially horizontally extending tooth (7,8) and at least one feed-through opening (9,10) for the tooth (7,8), and in that fixing means are provided for fixing the tooth (7,8) in a predetermined position while the same is placed in the feed-through opening (9,10).

## Description

The invention relates to a fastener for mounting and adjusting a chain guard on a bicycle frame, comprising a support member to be placed on a horizontal rear fork of the bicycle frame, and coupling means for fastening the chain guard on the support member.

In practice, such a fastener is used to ensure that the chain line is centred through the chain guard in order to avoid that the chain rattles against the interior of the chain guard. To realise this, the prior art uses numerous different brackets to provide a good fastening facility for every type of bicycle frame and every existing size of bicycle frame. This results in high costs, not only for the manufacture of the various brackets but also for keeping a supply of them in stock.

It is the object of the invention to provide a simple fastener that can be manufactured at low cost and that can be used for different types of bicycles frames and different sizes of bicycle frames.

The fastener for mounting and adjusting a chain guard on a bicycle frame in accordance with the invention is characterised in that the support member and the chain guard each are provided with at least one substantially horizontally extending tooth and at least one feed-through opening for the tooth, and in that fixing means are provided for fixing the tooth in a predetermined position while the same is placed in the feed-through opening.

This simple measure allows the chain guard to be adjusted manually or optionally automatically such that the chain is properly centred in the chain guard, while for mounting and adjusting the chain guard it suffices to use a standard model of a support member suitable for all types and sizes of bicycle frames.

The support member may be suitably realised such that this is a mounting block provided with a first feed-through opening located above the rear fork, and a second feed-through opening located below the rear fork. By using both feed-through openings it is possible to fasten the chain guard very firmly, especially by embodying the chain guard such that the same is provided with two substantially horizontally extending teeth for engaging the first feed-through opening and the second feed-through opening of the mounting block.

When using the mounting block, it is simple to mount and more in particular to adjust the chain guard on the bicycle frame by preferably embodying the mounting block with a clamping member hingingly fastened thereto for securing the tooth or teeth of the chain guard, which clamping member is moveable between a release position in which the position of the teeth can be adjusted and a clamping position in which the position of the teeth is fixed.

Preferably the clamping member is suitably embodied such that in the clamping position the same is located between the teeth of the chain guard.

It is further desirable for the tooth or teeth of the chain guard to be provided with a rough surface, preferably ridges. In this way, when the clamping member is in the clamping position, it is able to easily sustain this clamping position.

The invention is also embodied in the above-described separate support member as well as in the still to be mounted unfastened chain guard.

The chain guard according to the invention is characterised in that the same has at least one tooth extending substantially horizontally and at right angles to the guard, and which preferably has a ridged surface.

Hereinafter the invention will be further elucidated by way of an exemplary embodiment and with reference to the drawing.

In the drawing:
- Figs. 1 and 2 schematically show a rear portion of a bicycle frame and a support member for the chain guard to be mounted thereon, and
- Figs. 3 and 4 show an intermediate mounting stage and a final mounting stage of the fastener according to the invention.

Similar components in the figures carry the same reference numerals.

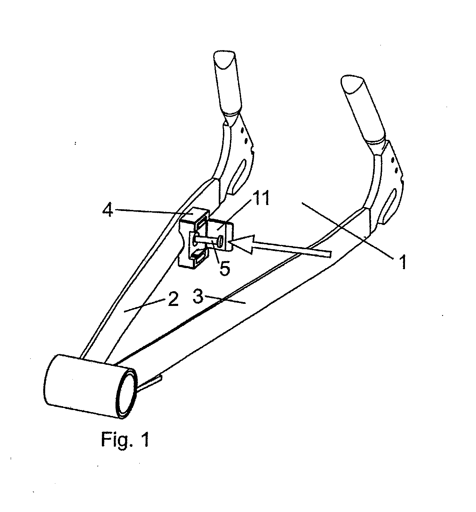

Referring first to Fig. 1, a rear portion 1 of a bicycle frame is shown. A part of this rear portion 1 is formed by the horizontal rear fork 2, 3.

In the portion of the rear fork 2, 3 situated between the paddle shaft and the rear wheel shaft there is a support member 4 that may be mounted on the horizontal rear fork 2 of the bicycle frame using, for example, a screw 5.

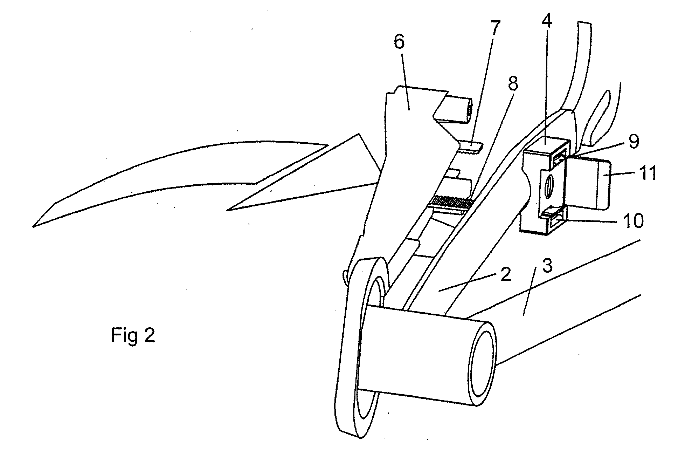

Fig. 2 shows a part of a chain guard 6 that has been placed near the rear fork 2 for mounting. After this part of the chain guard 6 has been mounted at the front side near the bracket, mounting and adjusting may commence at the rear side of the chain guard 6. To this end the chain guard 6 is provided with at least one, and in the case shown here, with two teeth 7, 8 extending substantially horizontally and at right angles to the guard 6. These teeth 7,8 of the chain guard 6 are designed to engage feed-through openings 9, 10 that form a part of the support member 4.

The support member 4 is preferably embodied as a mounting block placeable on the horizontal rear fork 2 at the side facing away from the chain guard 6, and is embodied such that the first feed-through opening 9 of the mounting block is located above the horizontal rear fork 2, and the second feed-through opening 10 is located below the rear fork 2.

Both Fig. 1 and Fig. 2 show that the mounting block 4 is provided with a hingingly mounted clamping member 11 for securing the tooth or teeth of the chain guard 6, to which end the clamping member 11 is moveable between a release position in which the position of the teeth 7, 8 can be adjusted, and a clamping position in which the teeth 7, 8 are secured in position.

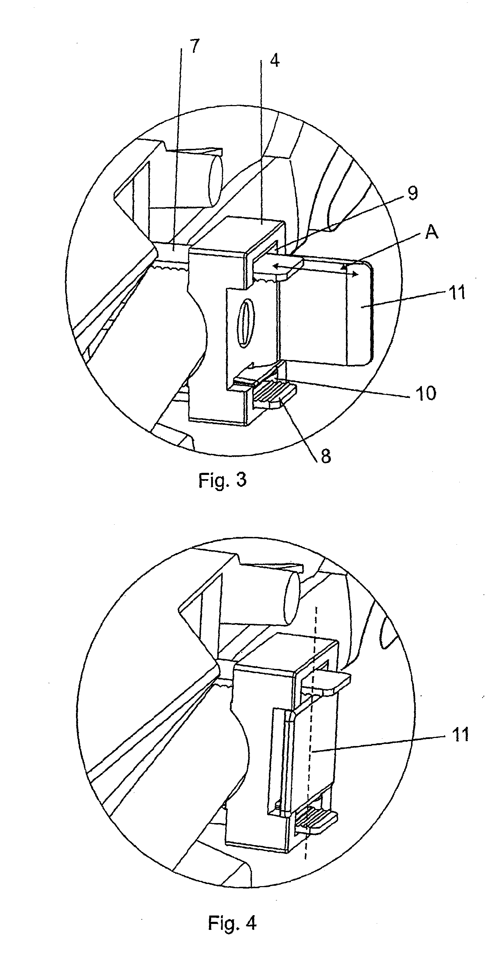

Mounting and adjusting of the chain guard 6 can be illustrated simply by way of the Figures 3 and 4. After the chain guard 6 has been coupled to the bicycle frame at the front side near the bracket, the chain guard 6 is moved in the direction of the horizontal rear fork 2, when the teeth 7, 8 extend through the feed-through openings 9, 10 of the mounting block 4. The chain guard 6 can then be positioned correctly by moving the chain guard sideways whereby the teeth 7, 8 carry out a movement as symbolised by arrow A.

When the chain guard 6 is positioned as desired, the teeth 7, 8 can then be secured in the mounting block 4 by moving the clamping member 11 from the released position shown in Fig. 3 to the clamping position shown in Fig. 4, wherein the teeth 7, 8 are secured in position. In this position the chain guard 6 can not undergo any further lateral movement and because, as clearly shown in Figs. 3 and 4, the surface of the teeth 7, 8 is ridged, while in the clamping position the clamping member 11 separates those teeth 7, 8 slightly, the chain guard is firmly mounted on the bicycle frame and is resistant to vibrations of the bicycle during use.

To the person skilled in the art it is obvious that the above-given explanation relates to a preferred embodiment of the fastener of the invention. There are many variations of this embodiment, which nevertheless fall within the protective scope of the appended claims. For example, it is possible to interchange the positions of the teeth and the feed-through opening. It is also feasible to vary the position of the support member on the rear fork.

The above-given explanatory embodiment must not be deemed to limit the protective scope merited by the spirit of the above-elucidated invention. This example merely serves to remedy any possible ambiguities in the appended claims.

## Claims

1. A fastener for mounting and adjusting a chain guard on a bicycle frame, comprising a support member to be placed on a horizontal rear fork of the bicycle frame and coupling means for fastening the chain guard on the support member, **characterised in that** the support member and the chain guard each are provided with at least one substantially horizontally extending tooth and at least one feed-through opening for the tooth, and **in that** fixing means are provided for fixing the tooth in a predetermined position while the same is placed in the feed-through opening.

2. A fastener according to claim 1, **characterised in that** the support member is a mounting block placeable on the horizontal rear fork at the side facing away from the chain guard, and viewed in the mounted condition the mounting block is provided with a first feed-through opening located above the rear fork, and a second feed-through opening located below the rear fork.

3. A fastener according to claim 2, **characterised in that** the chain guard is provided with two substantially horizontally extending teeth for engaging the first feed-through opening and the second feed-through opening of the mounting block.

4. A fastener according to claim 2 or 3, **characterised in that** the mounting block is provided with a clamping member hingingly fastened thereto for securing the tooth or teeth of the chain guard, and which is moveable between a release position in which the position of the teeth can be adjusted and a clamping position in which the position of the teeth is fixed.

5. A fastener according to claim 4, **characterised in that** the clamping position is located between the teeth of the chain guard.

6. A fastener according to one of the claims 1-5, **characterised in that** the tooth or teeth of the chain guard are provided with a rough surface, preferably ridges.

7. A support member as described as component according to one of the claims 1-6.

8. A chain guard **characterised by** at least one tooth extending substantially horizontally and at right angles to the guard.

9. A chain guard according to claim 8, **characterised in that** the at least one tooth has a ridged surface.

10. A chain guard according to claim 8 or 9, **characterised in that** the same has two teeth arranged one above the other.
